Europäisches Patentamt

European Patent Office

Office européen des brevets

(19)

(11) Veröffentlichungsnummer: **0 336 348**
**A2**

(12) # EUROPÄISCHE PATENTANMELDUNG

(21) Anmeldenummer: 89105838.0

(51) Int. Cl.4: **B28B 17/02**

(22) Anmeldetag: **01.04.89**

(30) Priorität: 06.04.88 DE 3811538

(43) Veröffentlichungstag der Anmeldung:
**11.10.89 Patentblatt 89/41**

(84) Benannte Vertragsstaaten:
**AT BE CH DE ES FR GB GR IT LI LU NL SE**

(71) Anmelder: **Sicotan GmbH & Co. KG**
**Mühleneschweg 7**
**D-4500 Osnabrück(DE)**

(72) Erfinder: **Hoffmann, Gerd**
**Mühlenescheweg 7**
**D-4500 Osnabrück(DE)**

(74) Vertreter: **Glaeser, Joachim, Dipl.-Ing. et al**
**Patentanwalt Königstrasse 28**
**D-2000 Hamburg 50(DE)**

(54) **Verfahren zur Herstellung von Beton-Formteilen.**

(57) Verfahren zur Herstellung von Beton-Bau oder - Formteilen oder -Profilen, bei welchem eine Betonmischung aus einem Behälter heraus in eine aus Seiten- und ggf. Innenschalungen gebildete Form geschüttet wird. Der Betonmischung wird nach dem Verlassen des Behälters, jedoch vor dem Einschütten in die Form mit Hilfe eines am Auslauf des Behälters angeordneten Mischers ein Beschleuniger zugemischt.

EP 0 336 348 A2

## Verfahren zur Herstellung von Beton-Formteilen

Die Erfindung bezieht sich auf ein Verfahren zur Herstellung von Beton-Bau- oder -Formteilen oder -Profilen, bei welchem eine Betonmischung aus einem Behälter heraus in eine aus Seiten- und ggf. Innenschalungen gebildete Form geschüttet wird.

Es ist bekannt, einer Betonmischung außer den üblichen Zuschlagstoffen auch einen Beschleuniger zuzugeben, um auf diese Art und Weise den an sich sehr langsam fortschreitenden Härtungsvorgang abzukürzen. Kritisch ist hierbei, daß die Betonmischung mit dem zugesetzten Beschleuniger nicht bereits im Mischbehälter, Transportbehälter oder dgl., auch nicht in der Leitung (Gummischlauch, Metallrohr oder Rutsche), sondern erst an Ort und Stelle in der Form aushärten soll. Im Zusammenhang mit Spritzverfahren, bei denen Druckluft eingesetzt wird, läßt sich die rasche Verfestigung des Betons beherrschen. So sind Trockenspritzverfahren (Dünnstromverfahren) und Naßspritzverfahren (Dichtstromverfahren) bekannt, die jedoch nicht im Zusammenhang mit der Herstellung von Beton-Formteilen, Beton-Profilen oder Fertigteilen eingesetzt werden können, weil diese horizontal liegend betoniert werden, so daß der sog. Rückprall in der Form verbleibt und dadurch zu einer Qualitätsminderung des Betonbauteils führt.

Es ist bekannt, bei der Herstellung von Betonteilen mit anspruchsvollen Formen (Hinterschneidungen und dgl.) eine hohe Gründruckfestigkeit zum Zwecke der schnellen Entformung zu erreichen, indem der erdfeuchte Beton stark verdichtet wird.

Es ist auch bekannt, Beton mit weicher Konsistenz für die Herstellung von anspruchsvollen Formen (Hinterschneidungen und dgl.) zu verwenden, jedoch muß dann eine relativ lange Zeit bis zum Entformen in Kauf genommen werden.

Die Erfindung befaßt sich mit dem Problem, Betonteile aus bewehrtem oder unbewehrtem Beton herzustellen, wobei eine weiche Betonkonsistenz eingestellt werden soll und dieser trotzdem zügig erstarrt, z.B. innerhalb von wenigen Minuten, d.h. eine hohe Grünstandfestigkeit erzielt werden kann, und zwar ohne, daß eine hohe Verdichtungsleistung erforderlich ist.

Erreicht wird dies durch ein Verfahren bzw. eine Vorrichtung, und zwar dadurch, daß der Betonmischung erst nach Verlassen des Mischers, eines Behälters oder Transportbehälters, der Beschleuniger zugemischt und in dieser Zusammensetzung in die Form gegeben wird. Ein Rüttler ist dabei meistens nicht erforderlich, so daß die mit dem Einsatz eines Rüttlers verbundene Lärmbelästigung entfällt.

Bei Verwendung eines Erstarrungsbeschleunigers, z.B. auf der Basis von Natriumaluminat kann gemäß der Erfindung eine Einbaukonsistenz von a > 40 cm (DIN 1048) erreicht werden, und der gebildete Formteil kann innerhalb von 30 Minuten entformt werden. Die Frischbetonrohdichten liegen dabei zwischen 1,0 und 2,4 kg/dm$^3$.

Mit Hilfe des Verfahrens gemäß der Erfindung können insbesondere auch Formteile mit anspruchsvollen geometrischen Formen hergestellt werden, da infolge der eingestellten Betonkonsistenz eine ausreichende Fließfähigkeit erzeugt wird, so daß selbst Hinterschneidungen erreicht werden können.

Das Verfahren kann in unterschiedlichen Art und Weisen durchgeführt werden. So kann beispielsweise der den Beton enthaltende Behälter mit dem daran befestigten Mischer relativ zur Form bewegt werden, es kann auch die Form relativ zum Behälter mit dem Mischer bewegt werden. Auf diese Art und Weise können auch langgestreckte Formteile in einer Art Strangpreßverfahren hergestellt werden. Besonders vorteilhaft läßt sich das Verfahren gemäß der Erfindung bei der Herstellung von Spaltenboden für die Landwirtschaft, Schornsteinformteilen, Großrohr-Sonderprofilen und vorgefertigten Köcherfundamenten einsetzen.

Geeignete Mischer zum Einmischen des Beschleunigers sind im Prinzip bekannt. Sie werden erfindungsgemäß jedoch am Auslauf des den Beton enthaltenden Behältnisses angebracht, so daß unmittelbar vor dem Eintritt in die Form selbst die Betonmischung den Beschleuniger in der geeigneten Konzentration enthält. Nicht vorhersehbar war, daß daher übliche Erstarrungsbeschleuniger eingesetzt werden konnen, die nicht "langsam gemacht" werden müssen.

Mit einer Grundmischung wurde bei dem Verfahren gemäß der Erfindung mit PZ 45 F oder HOZ 45 L (DIN 1164) durch Zugabe von flüssigem Erstarrungsbeschleuniger auf der Basis von Natriumaluminat eine hohe Druckfestigkeit (nach einem Tag 5 - 10 N/mm$^2$ bzw. 40 - 50 N/mm$^2$ nach 28 Tagen) erreicht, wobei nach 1/2h bereits Gründruckfestigkeiten von 0,2 N/mm$^2$ erreicht werden konnten, die bereits Entschalungsvorgänge zulassen. Der Ausgangsbeton hatte dabei eine Konsistenz mit einem Ausbreitmaß von ca. 55 cm (DIN 1048) und war etwa 1 Min. lang zur Herstellung von Betonteilen mit komplizierter Form (Hinterschneidungen) bei nur geringfügiger Verdichtungsleistung verarbeitbar.

2

**Ansprüche**

Verfahren zur Herstellung von Beton-Bau- oder -Formteilen oder -Profilen, bei welchem eine Betonmischung aus einem Behälter heraus in eine aus Seiten- und ggf. Innenschalungen gebildete Form geschüttet wird, dadurch gekennzeichnet, daß der Betonmischung nach dem Verlassen des Behälters und vor dem Einschütten in die Form mit Hilfe eines am Auslauf des Behälters angeordneten Mischers, vorzugsweise Durchlaufmischers, ein Beschleuniger zugemischt wird, wobei es sich um einen Erstarrungsbeschleuniger oder um eine Mischung aus Erstarrungs- und Erhärtungsbeschleuniger handelt.